# EUROPÄISCHE PATENTSCHRIFT

(11) **EP 3 467 926 B1**
(45) Veröffentlichungstag und Bekanntmachung des Hinweises auf die Patenterteilung: **27.07.2022**
(21) Anmeldenummer: 18155476.7
(22) Anmeldetag: 07.02.2018
(51) Int. Cl.: H01M 10/052, H01M 10/0565, H01M 10/0564, H01M 50/409

(54) **FASERVERSTÄRKTES KOMPOSITMATERIAL ZUR VERWENDUNG ALS SEPARATOR IN ELEKTROCHEMISCHER FESTKÖRPERZELLE**
FIBRE-REINFORCED COMPOSITE MATERIAL FOR USE AS A SEPARATOR IN ELECTROCHEMICAL SOLID STATE CELL
MATÉRIAU COMPOSITE RENFORCÉ PAR DES FIBRES DESTINÉ À ÊTRE UTILISÉ EN TANT QUE SÉPARATEUR DANS UNE CELLULE SOLIDE ÉLECTROCHIMIQUE

(30) Priorität: 05.10.2017 DE 102017217669
(43) Veröffentlichungstag der Anmeldung: 10.04.2019
(73) Patentinhaber: Robert Bosch GmbH, 70442 Stuttgart (DE)
(72) Erfinder: Sauter, Ulrich, 76199 Karlsruhe (DE); Berner, Ulrich, 70176 Stuttgart (DE)

(56) Entgegenhaltungen:
- WO-A1-2015/043917
- DE-A1-102004 063 215
- DE-A1-102014 111 622
- US-A1- 2009 155 676
- US-A1- 2012 171 548

## Beschreibung

Die Erfindung betrifft ein faserverstärktes Kompositmaterial, umfassend mindestens eine zusammenhängende, faserartige Struktur aus einem polymeren Material und mindestens ein ionenleitfähiges Polymer. Gegenstand ist ferner eine elektrochemische Festkörperzelle, umfassend dieses faserverstärkte Kompositmaterial. Das faserverstärkte Kompositmaterial erhöht die mechanische Stabilität der so erhaltenen elektrochemischen Festkörperzelle und unterbindet so den Kontakt zwischen den Elektroden der elektrochemischen Festkörperzelle. Weiterhin betrifft die Erfindung ein Verfahren zur Herstellung des faserverstärkte Kompositmaterials.

### Stand der Technik

Die Speicherung elektrischer Energie mittels elektrochemischer Primär- oder Sekundärzellen ist seit vielen Jahren bekannt. Insbesondere Sekundärzellen auf Grundlage von Lithium stehen im Fokus der Forschung. Üblicherweise umfassen solche Sekundärzellen mindestens eine negative Elektrode (Anode), mindestens eine positive Elektrode (Kathode) sowie mindestens einen Separator, welcher zwischen den beiden Elektroden angeordnet ist und diese elektronisch voneinander trennt. Der Separator sowie die Elektroden sind üblicherweise von einem flüssigen Elektrolyten umgeben, welcher den Ionentransport zwischen den Elektroden gewährleistet. Separatoren sind häufig aus porösen Kunststofffolien gefertigt, die eine gute Durchlässigkeit gegenüber dem Elektrolyt aufweisen, jedoch elektrisch nicht leitfähig sind. Typischerweise sind diese Kunststofffolien jedoch nur bedingt mechanisch belastbar und neigen insbesondere dann, wenn sich Lithium-Dendrite in der elektrochemischen Zelle ausbilden, zur Ausbildung von Löchern und/oder Rissen. Es kann so zu einem Kurzschluss in der elektrochemischen Zelle kommen. Um im Falle einer zu großen Wärmeentwicklung in der elektrochemischen Zelle ein Durchgehen zu verhindern, ist der Separator typischerweise wenigstens teilweise aus einem Polymer gefertigt, welches bei einer Temperaturerhöhung schmilzt und den Ionen-Transport zwischen den Elektroden so unterbricht.

Eine alternative Bauweise einer elektrochemischen Zelle verwendet Festelektrolyte, welche die Aufgaben des Elektrolyten und häufig auch die Aufgaben des Separators übernehmen und die Elektroden vor einem direkten Kontakt miteinander schützen sollen. Festelektrolyte können beispielsweise Polymerelektrolyte oder keramische Elektrolyte sein. Oft werden solche elektrochemische Zellen bei erhöhten Temperaturen betrieben, um eine ausreichend lonenleitfähigkeit zu erreichen. Polymerelektrolyte, insbesondere auf Basis von Polyalkylenoxiden, erweichen bei diesen Temperaturen häufig merklich, sodass diese auch schon bei Temperaturen von weniger als 100°C die Aufgabe des Separators nicht zuverlässig erfüllen können. Dabei kann es zu einem Kriechen des Polymerelektrolyten kommen, welches durch unerwünschte punktuelle Belastungen weiter verstärkt werden kann. Zu diesen punktuellen Belastungen zählen insbesondere Fremdpartikel in der Zelle (beispielsweise aus dem Herstellungsprozess), Lithium-Dendrite und die Selbstverstärkung von Inhomogenitäten an der Grenzfläche zwischen dem Lithium-Metall und dem Separator (z.B. durch Rauigkeit, inhomogene Solid Electrolyte Interface, inhomogene chemische Zusammensetzung der Grenzfläche, usw.) und daraus resultierende inhomogene Stromdichteverteilung.

US 2016/0351876 A1 offenbart einen Polyolefin-Separator mit einer hitzebeständigen ultrafeinen Faserschicht zur Verwendung in einer Sekundärbatterie. Die ultrafeine Faserschicht wird dabei auf die Oberfläche eines Polyolefin-Separators aufgebracht und ist aus einem Material gefertigt, welches eine Schmelztemperatur von mehr als 180°C aufweist.

US 2015/0249243 A1 offenbart elektrochemische Zelle, welche ein positives Aktivmaterial umfasst, auf dessen Oberfläche eine Faserschicht zusammen mit einer Schicht anorganischer Partikel aufgebracht ist.

US 2017/0033401 A1 offenbart einen faserverstärkten Polymerelektrolyt. Die Verstärkungsfasern sind gleichmäßig in dem Elektrolyt verteilt und nicht miteinander verbunden.

DE 10 2014111 622 A1 beschreibt eine flexible Membran mit einer porösen Membran und einer Festelektrolytbeschichtung, welche auf zumindest einem Abschnitt einer Oberfläche der porösen Membran in Poren der porösen Membran oder sowohl auf der Oberfläche als auch in den Poren gebildet ist.

DE 10 2004 063215 A1 beschreibt Mehrschicht- und Mehrkomponentenfunktionsmaterialien, bei denen die Schichten untereinander chemisch kovalent verknüpft sind.

### Offenbarung der Erfindung

Ein Gegenstand der Erfindung ist ein faserverstärktes Kompositmaterial, umfassend
mindestens eine zusammenhängende, faserartige Struktur aus mindestens einem polymeren Material, und
mindestens ein ionenleitfähiges Polymer,
wobei die mindestens eine zusammenhängende, faserartige Struktur in das mindestens eine ionenleitfähige Polymer eingebettet ist und Poren, welche die mindestens eine zusammenhängende, faserartige Struktur umfasst, im Wesentlichen vollständig von dem mindestens einen ionenleitfähigen Polymer ausgefüllt sind, wobei das faserverstärkte Kompositmaterial auf mindestens einer Oberfläche eine Beschichtung aufweist, die aus mindestens einem Material mit einer niedrigen Oberflächenenergie von weniger als 72 mN/m gefertigt ist. Das bedeutet, dass mindestens 90 vol.-%, vorzugsweise mindestens 95 vol.-%, bezogen auf das gesamte offene Porenvolumen der die zusammenhängende, faserartige Struktur, mit dem mindestens einen ionenleitfähigen Polymer ausgefüllt ist. Das mindestens eine ionenleitfähige Polymer kann dabei als ein reines Polymer oder in Form einer Polymerzusammensetzung vorliegen.

Es wurde gefunden, dass ein solches faserverstärktes Kompositmaterial, umfassend mindestens eine zusammenhängende, faserartige Struktur aus einem polymeren Material und mindestens ein ionenleitfähiges Polymer, wenn es als Separator in einer elektrochemischen Festkörperzelle eingesetzt wird, dazu geeignet ist, die mechanische Stabilität der elektrochemischen Festkörperzelle signifikant zu erhöhen und die Elektroden des faserverstärkte Kompositmaterials zuverlässig voneinander zu trennen ohne den Ionen-Transport zwischen den Elektroden zu beeinträchtigen.

Das faserverstärkte Kompositmaterial umfasst erfindungsgemäß mindestens zwei Komponenten, nämlich mindestens eine zusammenhängende, faserartige Struktur aus mindestens einem polymeren Material, und mindestens ein ionenleitfähiges Polymer. Das mindestens eine ionenleitfähige Polymer füllt die Poren der mindestens einen zusammenhängenden, faserartigen Struktur vorzugsweise vollständig aus. Das faserverstärkte Kompositmaterial weist daher vorzugsweise eine Restporosität von weniger als 10 vol.-%, stärker bevorzugt weniger als 5 vol.-%, insbesondere weniger als 1 vol.-%, bezogen auf das Gesamtvolumen des faserverstärkten Kompositmaterials, auf. In einer besonders bevorzugten Ausführungsform ist das faserverstärkte Kompositmaterial (im Wesentlichen) frei von Poren.

Der Volumenanteil der mindestens einen zusammenhängenden, faserartigen Struktur an dem Gesamtvolumen des faserverstärkte Kompositmaterials ist vorzugsweise möglichst gering. In einer bevorzugten Ausführungsform beträgt der Volumenanteil der mindestens einen zusammenhängenden, faserartigen Struktur an dem Gesamtvolumen des faserverstärkte Kompositmaterials < 40 vol.-%, vorzugsweise > 5 vol.-% bis < 30 vol.-%, insbesondere > 10 vol.-% bis < 20 vol.-%. So wird der Anteil an Material, aus welchem die zusammenhängende, faserartige Struktur gebildet ist, minimiert und die Energiedichte der elektrochemischen Festkörperzelle verbessert. Zudem wird die Leitfähigkeit des Separators maximiert.

Der Volumenanteil des mindestens einen ionenleitfähigen Polymers an dem Gesamtvolumen des faserverstärkten Kompositmaterials ist dementsprechend möglichst groß, um eine möglichst gute lonenleitfähigkeit zwischen den Elektroden zu gewährleisten. In einer bevorzugten Ausführungsform beträgt der Volumenanteil des mindestens einen ionenleitfähigen Polymers an dem Gesamtvolumen des faserverstärkten Kompositmaterials ≥ 60 vol.-%, vorzugsweise ≥ 70 vol.-% bis < 90 vol.-%, insbesondere ≥ 80 vol.-% bis < 90 vol.-%.

Die Poren der zusammenhängenden, faserartigen Struktur können prinzipiell beliebig ausgebildet sein, solange eine ausreichende mechanische Stabilität der Struktur gewährleistet ist. Form und Größe der Poren ist dabei von der Art der zusammenhängenden, faserartigen Struktur und deren Herstellungsverfahren abhängig. In einer bevorzugten Ausführungsform weisen die Poren der mindestens einen zusammenhängenden, faserartigen Struktur einen mittleren Durchmesser von 1 nm bis 100 µm, vorzugsweise 50 nm bis 10 µm, auf.

Die zusammenhängende, faserartige Struktur ist aus einem polymeren Material gefertigt, welches bei Temperaturen von ≥ 100°C, stärker bevorzugt von ≥ 120°C, insbesondere ≥ 150°C, im Wesentlichen nicht erweicht und seine Struktur beibehält. So wird eine ausreichende mechanische Stabilität des faserverstärkte Kompositmaterials auch dann erreicht, wenn der Polymerelektrolyt bereits erweichen sollte.

In einer Ausführungsform weist das polymere Material, aus dem die zusammenhängende, faserartige Struktur gefertigt ist, selbst ebenfalls ionenleitende Eigenschaften auf. Vorzugsweise ist die zusammenhängende, faserartige Struktur in diesem Fall aus einem ionenleitfähigen Polymer gefertigt, welches von dem ionenleitfähige Polymer, dass die Poren der zusammenhängenden, faserartigen Struktur in dem erfindungsgemäßen, faserverstärkten Kompositmaterial ausfüllt, verschieden ist.

Vorzugsweise unterscheiden sich das polymere Material, aus dem die zusammenhängende, faserartige Struktur gefertigt ist, und das ionenleitfähige Polymer, welches die Poren der zusammenhängenden, faserartigen Struktur in dem erfindungsgemäßen, faserverstärkten Kompositmaterial ausfüllt, dadurch voneinander, dass das polymere Material eine höhere Schmelz- oder Erweichungstemperatur aufweist, als das ionenleitfähige Polymer, und/oder ein anderes Löslichkeitsverhalten in Lösungsmittel aufweist.

Vorzugsweise ist die zusammenhängende, faserartige Struktur aus einem Polymer mit einem Schmelz- oder Erweichungstemperatur von ≥ 100°C, stärker bevorzugt ≥ 120°C und insbesondere ≥ 150°C, gefertigt. Polymere haben den Vorteil einer einfachen und kostengünstigen Herstellung. Als besonders geeignete Polymere hervorzuheben sind Polyolefine, Polyether, Polyester, Polyketone, Polyetherketone, Polyamide, Polyimide, Polyamidimide, Polysulfone, Polyethersulfone und Gemische davon. In einer bevorzugten Ausführungsform umfasst die zusammenhängende, faserartige Struktur daher mindestens eines dieser Polymere oder besteht aus mindestens einem dieser Polymere. Besonders bevorzugt sind zusammenhängende, faserartige Strukturen aus Polyolefinen, Polyethern, Polyestern, Polyketonen und/oder Polyamiden, sowie Gemischen der vorgenannten Polymere.

Die zusammenhängende, faserartige Struktur kann prinzipiell jede beliebige Struktur aufweisen, solange die zuvor gemachten Vorgaben erfüllt werden. "Faserartig" bedeutet in diesem Zusammenhang, dass die Struktur nicht ausschließlich aus individuellen, miteinander in Kontakt stehenden Fasern gebildet ist, sondern auch Bereiche aufweisen kann, in denen die faserartige Struktur durch Abschnitte des polymeren Materials gebildet werden, die ein Verhältnis von Durchmesser zu Länge des jeweiligen Abschnitts von mindestens 1:10 aufweise, wobei diese faserartigen Abschnitte keine definierten Enden aufweisen müssen. Sie können somit auch aus Bereichen des polymeren Materials durch Recken beispielsweise einer porösen Folie gebildet werden.

Insbesondere kann die thermisch stabile zusammenhängende, faserartige Struktur in Form eines Vlieses, einer Fasermatte, eines Gewebes, oder einer gereckten, porösen Folie vorliegen. In einer bevorzugten Ausführungsform liegt die zusammenhängende, faserartige Struktur in Form einer zusammenhängenden Faserstruktur vor, d.h. in Form einer Struktur, die aus einzelnen Fasern gebildet ist, welche miteinander verbunden sind, sodass ein zusammenhängendes textiles Flächengebilde entsteht. Die Bindungen zwischen den einzelnen Fasern können auf kovalenten Bindungen oder auch auf Wechselwirkungen wie Van-der Waals-Kräften oder Dipol-Dipol-Wechselwirkungen beruhen. Bevorzugte Beispiele hierfür sind Vliese, Fasermatten und/oder Gewebe.

Das erfindungsgemäße faserverstärktes Kompositmaterial umfasst ferner mindestens ein ionenleitfähiges Polymer, welches die Poren der mindestens einen zusammenhängenden, faserartigen Struktur (im Wesentlichen) vollständig ausfüllt. Das mindestens eine ionenleitfähige Polymer kann ein reines Polymer oder eine Polymerzusammensetzung sein und zeichnet sich dadurch aus, dass es mindestens ein Material umfasst oder aus diesem besteht, welches bei Raumtemperatur im Wesentlichen fest ist, und wenigstens bei Betriebstemperatur eine ausreichende lonenleitfähigkeit aufweist, um den Transport von Ionen, insbesondere Lithiumionen, zwischen den Elektroden zu gewährleisten. Als ionenleitfähige Polymere können prinzipiell sämtliche Polymere in dem erfindungsgemäßen faserverstärkten Kompositmaterial eingesetzt werden, welche dem Fachmann zur Verwendung in Polymerelektrolyten für elektrochemische Festkörperzellen, insbesondere für lithiumhaltige elektrochemische Festkörperzellen, bekannt sind. Als geeignete Polymere umfassen Polyalkylenoxid-Derivate von Polyethylenoxid, Polypropylenoxid und dergleichen oder Polymere, umfassend Polyalkylenoxid-Derivate; Derivate von Polyvinylidenfluorid (PVDF), Polyhexafluorpropylen, Polycarbonate, Polyphosphorsäureester, Polyalkylimine, Polyacrylnitril, Poly(meth)acrylsäureester, Polyphosphazene, Polyurethane, Polyamide, Polyester, Polysiloxane, Polymalonsäureester, Polymalonsäureester und dergleichen und Polymere, umfassend Derivate davon. Bevorzugt sind Polymerverbindungen, welche eine Oxyalkylenstruktur, eine Urethanstruktur oder eine Carbonatstruktur im Molekül aufweise. Beispielsweise sind Polyalkylenoxide, Polyurethane und Polycarbonate in Hinblick auf ihre gute elektrochemische Stabilität bevorzugt. Ferner sind Polymere mit einer Fluorkohlenstoffgruppe bevorzugt. Polyvinylidenfluorid und Polyhexafluorpropylen sind in Hinblick auf ihre Stabilität bevorzugt. Die Anzahl an Wiederholungseinheiten dieser Oxyalkylen-, Urethan-, Carbonat- und/oder Fluorkohlenstoffeinheiten liegt vorzugweise in einem Bereich von jeweils 1 bis 1000, stärker bevorzugt ein einem Bereich von 5 bis 100.

Zur Verbesserung der lonenleitfähigkeit werden dem Polymer vorzugsweise Leitsalze zugegeben. Geeignete Leitsalze sind insbesondere Lithiumsalze. Das Leitsalz kann beispielsweise ausgewählt sein aus der Gruppe bestehend aus Lithiumperchlorat (LiClO₄), Lithiumtetrafluoroborat (LiBF₄), Lithiumhexafluorophosphat (LiPF₆), Lithiumhexafluoroarsenat (LiAsF₆), Lithiumtrifluormethansulfonat (USO₃CF₃), Lithiumbis(trifluormethylsulphonyl)imid (LiN(SO₂CF₃)₂), Lithiumbis(pentafluorethylsulphonyl)imid (LiN(SO₂C₂F₅)₂), Lithiumbis(oxalato)borat (LiBOB, LiB(C₂O₄)₂), Lithiumdifluor(oxalato)borat (LiBF₂(C₂O₄)), Lithium-tris(pentafluorethyl)trifluorophosphat (LiPF₃(C₂F₅)₃) und Kombinationen davon. Diese könne jeweils einzeln, oder in Kombination miteinander verwendet werden. Vorzugsweise macht das mindestens eine Leitsalz einen Anteil von 1 bis 5 Gew.-%, insbesondere 2 bis 3 Gew.-% des Gesamtgewichts des ionenleitfähigen Polymers aus.

Darüber hinaus kann das ionenleitfähige Polymer weitere Bestandteile umfassen, die auf die vorgesehene Verwendung des faserverstärkten Kompositmaterials, insbesondere die Art der elektrochemischen Festkörperzelle, abgestimmt ist. Beispielsweise kann das ionenleitfähige Polymer Bestandteile des Katholyt der elektrochemischen Festkörperzelle umfassen, sofern sich dieser vom Elektrolyt der elektrochemischen Festkörperzelle unterscheidet.

Das faserverstärkte Kompositmaterial kann prinzipiell in jeder beliebigen räumlichen Ausgestaltungsform ausgebildet werden und so auch in einer elektrochemischen Festkörperzelle eingesetzt werden, solange eine ausreichende Trennung der Elektroden gewährleistet wird. In einer bevorzugten Ausführungsform ist das faserverstärkte Kompositmaterial flächig ausgestaltet, insbesondere in Form einer faserverstärkten Kompositmaterial-Folie. Diese weist vorzugsweise eine Folienstärke von 1 nm bis 500 µm, insbesondere 500 nm bis 25 µm.

Vorzugsweise sind die Poren der zusammenhängenden, faserartigen Struktur so ausgestaltet, dass diese auch bei Temperaturen, bei denen das ionenleitfähige Polymer im geschmolzenen Zustand vorliegt, im Wesentlichen vollständig mit dem ionenleitfähige Polymer ausgefüllt sind, d.h. zu mindestens 90 vol.-%, vorzugsweise mindestens 95 vol.-%, bezogen auf das gesamte offene Porenvolumen der zusammenhängenden, faserartigen Struktur. Dies wird durch eine ausgewogene Abstimmung von dem ionenleitfähigem Polymer, dem polymerem Material, aus dem die zusammenhängende, faserartige Struktur gefertigt ist, und dem mittleren Porendurchmesser der Poren der zusammenhängenden, faserartigen Struktur, aufeinander erreicht. Dadurch wird verhindert, dass flüssiges Lithium in die das Kompositmaterial eindringen und gegebenenfalls bis zur positiven Elektrode durchdringen kann.

Gemäß der Erfindung ist mindestens eine Oberfläche des Kompositmaterials mit einem Material beschichtet welches eine Oberflächenenergie von weniger als 72 mN/m aufweist. Vorzugsweise ist mindestens die Oberfläche des Kompositmaterials mit einem Material beschichtet, das eine niedrige Oberflächenenergie von weniger als 72 nN/m aufweist, die bei der

Verwendung in einer elektrochemischen Festkörperzelle der negativen Elektrode zugewandt sein soll. Dadurch wird verhindert, dass gegebenenfalls vorhandenes flüssiges Lithium in das Kompositmaterial eindringen und gegebenenfalls bis zur positiven Elektrode durchdringen kann.

In einer weiteren Ausführungsform können die zuvor genannten Maßnahmen miteinander kombiniert werden. So wird das Eindringen von flüssigem Lithium in das Kompositmaterial noch effektiver verhindert.

Gegenstand der Erfindung ist auch ein Verfahren zur Herstellung des erfindungsgemäßen faserverstärkten Kompositmaterials gemäss Anspruch 1, umfassend die Verfahrensschritte:
(i) Bereitstellen mindestens einer zusammenhängenden, faserartigen Struktur aus einem polymeren Material, und
(ii) Inkontaktbringen der mindestens einen zusammenhängenden, faserartigen Struktur mit einem im Wesentlichen flüssigen, ionenleitfähigen Polymer, sodass das Porenvolumen der zusammenhängenden, faserartigen Struktur im Wesentlichen vollständig, d.h. zu mindestens 90 vol.-%, vorzugsweise mindestens 95 vol.-%, bezogen auf das gesamte offene Porenvolumen der zusammenhängenden, faserartigen Struktur, mit dem ionenleitfähigen Polymer gefüllt wird.

Vorzugsweise wird die zusammenhängende, faserartige Struktur durch Recken (Verstrecken), Electrospinning-Verfahren, Electroblowing-Verfahren oder artverwandte Verfahren aus dem polymeren Material hergestellt werden.

Das faserverstärkte Kompositmaterial wird vorzugsweise in Form einer faserverstärktes Kompositmaterial-Folie hergestellt. Dies wird beispielsweise dadurch erreicht, dass in Schritt (i) die zusammenhängende, faserartige Struktur in Form eines Vlieses oder einer Fasermatte mit geeigneter Stärke eingesetzt wird.

Das im Wesentlichen flüssige, ionenleitfähige Polymer kann durch Erwärmen des bei Raumtemperatur festen ionenleitfähigen Polymers auf eine Temperatur oberhalb seiner Schmelztemperatur bzw. Erweichungstemperatur erhalten werden. "Im Wesentlichen flüssig" bedeutet, dass die Polymerschmelze geringe feste Bestandteile, insbesondere Leitsalze umfassen kann. Die Temperatur wird dabei vorzugsweise so ausgewählt, dass das ionenleitfähige Polymer eine ausreichend geringe Viskosität aufweist, um die zusammenhängende, faserartige Struktur infiltrieren zu können, das polymere Material, aus dem die zusammenhängende, faserartige Struktur gefertigt ist, bei dieser Temperatur jedoch weitgehend chemisch und physikalisch stabil ist, sodass die zusammenhängende, faserartige Struktur im Wesentlichen erhalten bleibt.

Alternativ kann auch eine Lösung des ionenleitfähigen Polymers in einem geeigneten Lösungsmittel eingesetzt werden, wobei das Lösungsmittel anschließend wieder entfernt wird. Das Lösungsmittel wird dabei vorzugsweise so ausgewählt, dass das ionenleitfähige Polymer darin eine ausreichende Löslichkeit aufweist, um die zusammenhängende, faserartige Struktur infiltrieren zu können, das polymere Material, aus dem die zusammenhängende, faserartige Struktur gefertigt ist, darin jedoch weitgehend chemisch und physikalisch stabil ist, sodass die zusammenhängende, faserartige Struktur im Wesentlichen erhalten bleibt.

In einem weiteren Schritt (iii) kann die Polymer-gefüllte, zusammenhängende, faserartige Struktur in ein festes faserverstärktes Kompositmaterial überführt werden. Sofern in einem der vorhergehenden Verfahrensschritte eine Schmelze des ionenleitfähigen Polymers eingesetzt wurde, kann dieser Schritt durch Abkühlen der Polymer-gefüllten, zusammenhängenden, faserartigen Struktur unter die Schmelztemperatur bzw. Erweichungstemperatur des ionenleitfähigen Polymers erreicht werden. Sofern in einem der vorhergehenden Verfahrensschritte eine Lösung des ionenleitfähigen Polymers eingesetzt wurde, kann dies durch Abdampfen des Lösungsmittels erreicht werden. Hierzu kann gegebenenfalls eine Reduzierung des Umgebungsdrucks und/oder eine Erhöhung der Umgebungstemperatur angewandt werden.

Das durch das erfindungsgemäße Verfahren erhaltene faserverstärktes Kompositmaterial aus zusammenhängender, faserartiger Struktur und ionenleitfähigem Polymer kann anschließend wie ein herkömmlicher Separator weiter in der elektrochemischen Festkörperzelle verbaut werden.

In einer alternativen Ausführungsform der Erfindung wird die zusammenhängende, faserartige Struktur durch Electrospinning-Verfahren, Electroblowing-Verfahren oder artverwandte Verfahren in Form einer Fasermatte unmittelbar auf die Oberfläche mindestens einer Elektrode aufgebracht werden. In diesem Fall wird in Schritt (ii) das Laminat aus Elektrode und zusammenhängender, faserartiger Struktur mit dem im Wesentlichen flüssigen, ionenleitfähigen Polymer in Kontakt gebracht.

Auf der Oberfläche des faserverstärkten Kompositmaterials kann ferner mindestens eine poröse Folie eines Polymers mit einer Schmelztemperatur von ≤ 200°C, vorzugsweise ≤ 175°C, insbesondere ≥ 120°C und ≤ 170°C, aufgebracht sein. Diese kann beispielsweise aus einem Polyolefin oder einem Polyester gefertigt sein. Eine solche Polymerfolie schmilzt, sobald die Temperaturen in der elektrochemischen Festkörperzelle über die Schmelztemperatur des Polymers, aus dem die Polymerschicht gefertigt ist, ansteigen. Dadurch werden die Poren in der Polymerschicht verschlossen und der Ionentransport zwischen den Elektroden wird unterbrochen (sog. thermal Shut-down). Auch ein Laminat aus mindestens zwei zusammenhängenden, faserartigen Strukturen, zwischen denen eine Schicht eines porösen Polymers mit einer Schmelztemperatur von ≤ 200°C, vorzugsweise ≤ 175°C, insbesondere ≥ 120°C und ≤ 170°C, angeordnet ist, ist denkbar.

Gegenstand der Erfindung ist auch eine elektrochemische Festkörperzelle, umfassend das erfindungsgemäße faserverstärkte Kompositmaterial, vorzugsweise in Form mindestens einer faserverstärkten Kompositmaterial-Folie. Neben dem faserverstärkten Kompositmaterial umfasst die erfindungsgemäße elektrochemische Festkörperzelle noch mindestens eine negative Elektrode, mindestens eine positive Elektrode, sowie gegebenenfalls mindestens einen Polymerelektrolyt und/oder mindestens einen Separator.

Die mindestens eine negative Elektrode umfasst mindestens einen Stromsammler und mindestens ein Aktivmaterial (nachfolgend auch als negatives Aktivmaterial bezeichnet). Als negatives Aktivmaterial kann prinzipiell jedes dem Fachmann bekannte Aktivmaterial verwendet werden, welches üblicherweise zur Verwendung in negativen Elektroden, insbesondere negativen Elektroden für Lithium-haltige elektrochemische Festkörperzellen, geeignet ist. Besonders bevorzugt wird ein Aktivmaterial verwendet, welches elementares (metallisches) Lithium umfasst oder daraus besteht. Dies ermöglicht die Herstellung elektrochemischer Festkörperzellen mit besonders hohen Energiedichten. Solche Festkörperzellen sind typischerweise besonders stark von der Ausbildung von Lithium-Dendriten betroffen und können somit besonders von der Verwendung des erfindungsgemäßen faserverstärkten Kompositmaterials profitieren. Zudem zeichnen sich die erfindungsgemäßen Festkörperzellen durch einen besonders guten Schutz gegenüber Defekten der Lithium-Oberfläche und Defekten durch Fremdkörper in der Festkörperzelle aus.

Der Stromsammler der negativen Elektrode besteht aus mindestens einem elektrisch leitfähigen Material. Geeignete Materialien, aus denen der Stromsammler gebildet sein kann sind beispielsweise Aluminium, Kupfer, Nickel oder auch Legierungen dieser Metalle. Auch die Verwendung eines Stromsammlers aus elementarem (metallischem) Lithium ist ebenfalls denkbar. Vorzugsweise stellt Lithium in diesem Fall sowohl das Aktivmaterial als auch das Material des Stromsammlers dar. Die Schichtdicke des Stromsammlers ist vorzugsweise nicht besonders eingeschränkt und reicht beispielsweise von 1 bis 500 µm, insbesondere von 1 bis 25 µm. Vorzugsweise ist der Stromsammler der negativen Elektrode flächig ausgestaltet.

Als positive Elektrode können sämtliche dem Fachmann bekannten Elektroden eingesetzt werden, welche als positive Elektroden in elektrochemischen Festkörperzellen, insbesondere in lithiumhaltigen elektrochemischen Festkörperzellen, eingesetzt werden können. Diese umfassen üblicherweise mindestens einen Stromsammler, sowie mindestens ein Aktivmaterial, welches auf mindestens einer Oberfläche des mindestens einen Stromsammlers angeordnet und mit diesem elektrisch leitend verbunden ist. Der Stromsammler ist aus einem elektrisch leitfähigen Material gefertigt. Geeignete Materialien, aus denen der Stromsammler gebildet sein kann sind beispielsweise Aluminium, Kupfer, Nickel oder auch Legierungen dieser Metalle. Im Übrigen kann der Stromsammler der positiven Elektrode wie der Stromsammler der negativen Elektrode ausgebildet sein. Das positive Aktivmaterial umfasst dabei in der Regel Verbindungen, welche in der Lage sind Lithium-Ionen reversibel aufzunehmen und freizusetzen. Typische positive Aktivmaterialien sind dabei Mischoxide, welche Lithium sowie mindestens ein Metall, ausgewählt aus der Gruppe, bestehend aus Nickel, Kobalt, Mangan (sog. NCM-Mischoxide), umfassen. Als Beispiele zu nennen sind: LiCoO₂, Lithium-Nickel-Kobalt-Aluminium-Oxide (z.B. LiNi_{0,8}Co_{0,15}Al_{0,05}O₂; NCA) und Lithium-Nickel-Mangan-Kobalt-Oxide (z.B. LiNi_{0,8}Mn_{0,1}Co_{0,1}O₂ (NMC (811)), LiNi_{0,33}Mn_{0,33}Co_{0,33}O₂ (NMC (111)), LiNi_{0,6}Mn_{0,2}Co_{0,2}O₂ (NMC (622)), LiNi_{0,5}Mn_{0,3}Co_{0,2}O₂ (NMC (532)) oder LiNi_{0,4}Mn_{0,3}Co_{0,3}O₂ (NMC (433)), überlithiierte Schichtoxide der allgemeinen Formel n(Li₂MnO₃) · 1-n (LiMO₂) mit M = Co, Ni, Mn, Cr und 0 ≤ n ≤ 1, Spinelle der allgemeinen Formel n(Li₂MnO₃) · 1-n (LiM₂O₄) mit M=Co, Ni, Mn, Cr und 0 ≤ n ≤ 1. Ferner sind insbesondere Spinellverbindungen der Formel LiMₓMn₂₋ₓO₄ mit M = Ni, Co, Cu, Cr, Fe (z.B. LiMn₂O₄, LiNi_{0.5}Mn_{1.5}O₄), Olivinverbindungen der Formel LiMPO₄ mit M = Mn, Ni, Co, Cu, Cr, Fe (z.B. LiFePO₄, LiMnPO₄), Silikatverbindungen der Formel Li₂MSiO₄ mit M = Ni, Co, Cu, Cr, Fe, Mn (z.B. Li₂FeSiO₄), Tavoritverbindungen (z.B. LiVPO₄F), Li₂MnO₃, Li_{1.17}Ni_{0.17}Co_{0.1}Mn_{0.56}O₂ und Li₃V₂(PO₄)₃ als geeignete positive Aktivmaterialien hervorzuheben. Weiter umfasst das Aktivmaterial in der Regel mindestens ein Bindemittel. Übliche Bindemittel für die positive Elektrode umfassen Styrol-Butadien-Copolymer (SBR), Polyvinylidenfluorid (PVDF), Polytetrafluorethen (PTFE), Carboxymethylcellulose (CMC), Polyacrylsäure (PAA), Polyvinylalkohol (PVA) und Ethylen-Propylen-Dien-Terpolymer (EPDM). Alternativ können auch die bereits beschriebenen ionenleitfähigen Polymere, welche in dem erfindungsgemäßen faserverstärkten Kompositmaterial eingesetzt werden, als Bindemittel verwendet werden. Ferner umfasst das Aktivmaterial häufig auch noch Leitadditive, z.B. Leitruß, um die elektrische Leitfähigkeit zu verbessern.

Gegebenenfalls umfasst die elektrochemische Festkörperzelle mindestens einen Polymerelektrolyt. Dieser zeichnet sich dadurch aus, dass er ein Material umfasst oder aus diesem besteht, welches bei Raumtemperatur im Wesentlichen fest ist, und wenigstens bei Betriebstemperatur eine ausreichende lonenleitfähigkeit aufweist, um den Transport von Ionen, insbesondere Lithiumionen, zwischen den Elektroden zu gewährleisten. Darüber hinaus ist der Polymerelektrolyt nicht elektrisch leitfähig. Als Polymerelektrolyt können prinzipiell sämtliche dem Fachmann bekannte Polymerelektrolyte in der erfindungsgemäßen elektrochemischen Festkörperzelle eingesetzt werden, welche als Polymerelektrolyte in elektrochemischen Festkörperzellen, insbesondere in lithiumhaltigen elektrochemischen Festkörperzellen, eingesetzt werden können. Diese umfassen in der Regel vorzugsweise mindestens ein Polymer und mindestens ein Leitsalz. Insbesondere sind die zuvor genannten Polymere und Leitsalze geeignet. In einer besonders bevorzugten Ausführung ist das ionenleitfähige Polymer des faserverstärkten Kompositmaterials identisch mit dem Polymer des verwendeten Polymerelektrolyten. Dies gewährleistet eine möglichst hohe lonenleitfähigkeit.

Das faserverstärkte Kompositmaterial ist vorzugsweise in Form einer faserverstärkten Kompositmaterial-Folie so in der elektrochemischen Festkörperzelle angeordnet, dass diese die mindestens eine negative Elektrode und die mindestens eine positive Elektrode mechanisch voneinander trennt. So übernimmt das faserverstärkte Kompositmaterial die Aufgabe des Separators der elektrochemischen Festkörperzelle. In einer bevorzugten Ausführungsform der Erfindung ist in der elektrochemischen Festkörperzelle zwischen der positiven Elektrode und der negativen Elektrode daher kein zusätzlicher Separator angeordnet. In einer alternativen Ausführungsform umfasst die elektrochemische Festkörperzelle zwischen der positiven Elektrode und der negativen Elektrode zusätzlich mindestens einen herkömmlichen Separator. Solche Separatoren umfassen üblicherweise Polymere mit einer Schmelztemperatur von ≤ 200°C, vorzugsweise ≤ 175°C, insbesondere ≥ 120°C und ≤ 170°C. Üblicherweise werden Polymere wie Polyolefine, Polyester und fluorierte Polymere eingesetzt. Besonders bevorzugte Polymere sind Polyethylen (PE), Polypropylen (PP), Polyethylenterephthalat (PET) und Polyvinylidenfluorid (PVDF). Ein solcher Separator ist dabei ebenfalls mit einem Polymerelektrolyt infiltriert und kann innerhalb der elektrochemischen Festkörperzelle - wie zuvor beschreiben - unmittelbar auf mindestens einer Oberfläche des faserverstärkten Kompositmaterials aufgebracht sein, oder aber unabhängig von diesem, innerhalb der elektrochemischen Festkörperzelle zwischen der mindestens einen negativen Elektrode und der mindestens einen positiven Elektrode angeordnet sein. In einer Ausführungsform der Erfindung steht das faserverstärkte Kompositmaterial daher nicht in unmittelbaren Kontakt mit einem herkömmlichen Separator.

Prinzipiell kann das mindestens eine faserverstärkte Kompositmaterial innerhalb der elektrochemischen Festkörperzelle an jeder beliebigen Position angeordnet sein, solange sie sich zwischen der mindestens einen negativen Elektrode und der mindestens einen positiven Elektrode befindet und diese zuverlässig voneinander trennt.

In einer Ausführungsform der Erfindung ist das mindestens eine faserverstärkte Kompositmaterial auf der mindestens einer Oberfläche der mindestens einen positiven Elektrode angeordnet.

In einer alternativen Ausführungsform ist das mindestens eine faserverstärkte Kompositmaterial in einem Polymerelektrolyt eingebettet. Das bedeutet, dass zwischen der Oberfläche des mindestens einen faserverstärkten Kompositmaterials und der Oberfläche der mindestens einen positiven Elektrode und/oder zwischen der Oberfläche des mindestens einen faserverstärkten Kompositmaterials und der Oberfläche der mindestens einen negativen Elektrode jeweils mindestens eine Schicht aus einem Polymerelektrolyt angeordnet ist.

In einer Ausführungsform der Erfindung macht das faserverstärkte Kompositmaterial nur einen Teil des Separators aus, sodass nicht der gesamte Separator zwischen der negativen Elektrode und der positiven Elektrode die zusammenhängenden, faserartigen Struktur enthält, sondern nur aus Polymerelektrolyt und Additiven besteht. Vorzugsweise umfasset der Separator zu ≤ 95 Vol.-%, insbesondere ≤ 50 Vol.-%, bezogen auf die Dicke des Separators, die zusammenhängende, faserartige Struktur.

Vorzugsweise ist das faserverstärkte Kompositmaterial nicht in direktem Kontakt zu der mindestens einen negativen Elektrode in der elektrochemischen Festkörperzelle angeordnet.

Die erfindungsgemäße elektrochemische Festkörperzelle findet vorteilhaft Verwendung in einem Elektrofahrzeug (EV), in einem Hybridfahrzeug (HEV), in einem Plug-In-Hybridfahrzeug (PHEV), in einem Werkzeug oder in einem Consumer-Elektronik-Produkt. Unter Werkzeugen sind dabei insbesondere Heimwerkzeuge sowie Gartenwerkzeuge zu verstehen. Unter Consumer-Elektronik-Produkten sind insbesondere Mobiltelefone, Tablet-PCs oder Notebooks zu verstehen.

### Vorteile der Erfindung

Das erfindungsgemäße faserverstärkte Kompositmaterial zeichnet sich dadurch aus, dass es auch starker mechanischer Beanspruchung Stand hält und so bei der Verwendung in einer erfindungsgemäßen elektrochemischen Festkörperzelle den Kontakt zwischen der positiven Elektrode und der negativen Elektrode unterbinden kann. Eine Kurzschlussreaktion wird dadurch effektiv vermieden und die Sicherheit der elektrochemischen Festkörperzelle so deutlich erhöht. Das faserverstärkte Kompositmaterial ist in der Lage ein Kriechen des Polymerelektrolyten zu unterbinden. Zudem zeichnen sich die erfindungsgemäßen Festkörperzellen durch einen besonders guten Schutz gegenüber Defekten der Lithium-Oberfläche und Defekten durch Fremdkörper in der Festkörperzelle aus. Darüber hinaus ist das faserverstärkte Kompositmaterial durch ein einfaches und kostengünstiges Verfahren herstellbar.

### Kurze Beschreibung der Zeichnungen

Es zeigt:
- Figur 1: eine schematische Darstellung einer erfindungsgemäßen elektrochemischen Festkörperzelle;
- Figur 2: eine schematische Darstellung einer alternativen erfindungsgemäßen elektrochemischen Festkörperzelle; und
- Figur 3: eine schematische Darstellung einer weiteren alternativen erfindungsgemäßen elektrochemischen Festkörperzelle.

### Ausführungsformen der Erfindung

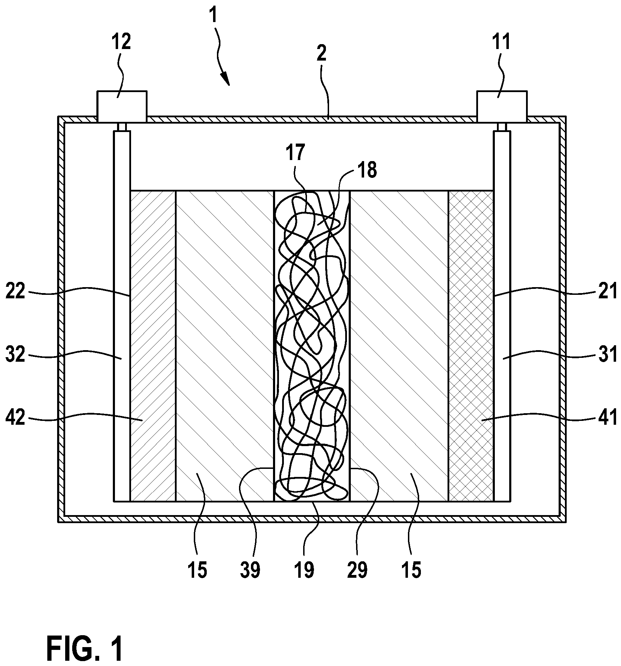

In Figur 1 ist der Aufbau einer elektrochemischen Festkörperzelle 1 schematisch dargestellt. Eine positive Elektrode 21 und eine negative Elektrode 22 sind in einem Zellgehäuse 2 angeordnet. Die positive Elektrode 21, umfassend einen Stromsammler 31 und ein Aktivmaterial 41, ist über den Stromsammler 31 mit dem positiven Terminal 11 verbunden. Das Aktivmaterial 41 der positiven Elektrode 21 umfasst beispielsweise ein NCM- oder NCA-Mischoxid als Aktivmaterial und Polyethylenoxid als lonenleiter. Vorzugsweise umfasst das Polyethylenoxid zusätzlich ein Leitadditiv, z.B. Li(CF₃)SO₂NSO₂(CF₃) (LiTFSI). Der Stromsammler 31 ist vorzugsweise aus einem Metall gefertigt, z.B. aus Aluminium. Gegenüberliegend befindet sich eine negative Elektrode 22, die ebenfalls ein Aktivmaterial 42 und einen Stromsammler 32 umfasst, über welchen die negative Elektrode 22 zur Ableitung mit dem negativen Terminal 12 verbunden ist. Das Aktivmaterial 42 der negativen Elektrode 22 besteht vorliegend aus elementarem Lithium und ist auf einem Teil der Oberfläche des Stromsammlers 32, welcher aus Nickel gefertigt ist, angeordnet.

Das faserverstärkte Kompositmaterial 19 ist (vorliegend in Form einer Fasermatte) zwischen der negative Elektrode 22 und die positive Elektrode 21 angeordnet und trennt diese mechanisch voneinander. Zusätzlich ist zwischen der ersten Oberfläche 29 des faserverstärkten Kompositmaterials 19 und der positiven Elektrode 21, sowie der zweiten Oberfläche 39 des faserverstärkten Kompositmaterials 19 und der negativen Elektrode 22 jeweils ein Polymerelektrolyt 15 angeordnet. Dieser stellt eine ionenleitfähige Verbindung zwischen der positiven Elektrode 21 und der negativen Elektrode 22 her. Als Polymerelektrolyt 15 wird beispielsweise ein Gemisch aus Polyethylenoxid und Li(CF₃)SO₂NSO₂(CF₃) (LiTFSI), eingesetzt.

Das faserverstärkte Kompositmaterial 19 umfasst eine zusammenhängende, faserartige Struktur 17 aus einem polymeren Material, welches eine Vielzahl von Poren 18 aufweist. Diese sind erfindungsgemäß (im Wesentlichen) vollständig mit einem ionenleitfähigen Polymer gefüllt sind. Vorliegend ist das ionenleitfähige Polymer identisch mit dem Polymerelektrolyt 15. Alternativ kann es sich bei dem ionenleitfähigen Polymer um ein Polymer handeln, welches als Polymer eines Polymerelektrolyten geeignet ist, ohne jedoch ein Leitsalz zu umfassen. Beispielsweise könnte das ionenleitfähige Polymer Poly(ethylenoxid) sein. Alternativ könnte es sich bei dem ionenleitfähigen Polymer um den Katholyt der elektrochemischen Festkörperzelle handeln, sofern sich dieser vom Elektrolyt unterscheidet. Das faserverstärkte Kompositmaterial 19 umfasst selbst vorzugsweise keine Poren, d.h. die zusammenhängende, faserartige Struktur 17 ist vorzugsweise vollständig von dem ionenleitfähigen Polymer durchdrungen. Erfindungsgemäss ist mindestens eine Oberfläche 39 des faserverstärkten Kompositmaterials 19 mit einer Beschichtung versehen, die eine niedrige Oberflächenenergie von weniger als 72mN/m aufweist. Besonders bevorzugt ist mindestens die der negativen Elektrode 22 zugewandte zweite Oberfläche 39 mit einer solchen Beschichtung versehen. So kann ein Eindringen von gegebenenfalls vorhandenem geschmolzenem Lithium in das faserverstärkte Kompositmaterial 19 effektiv verhindert werden.

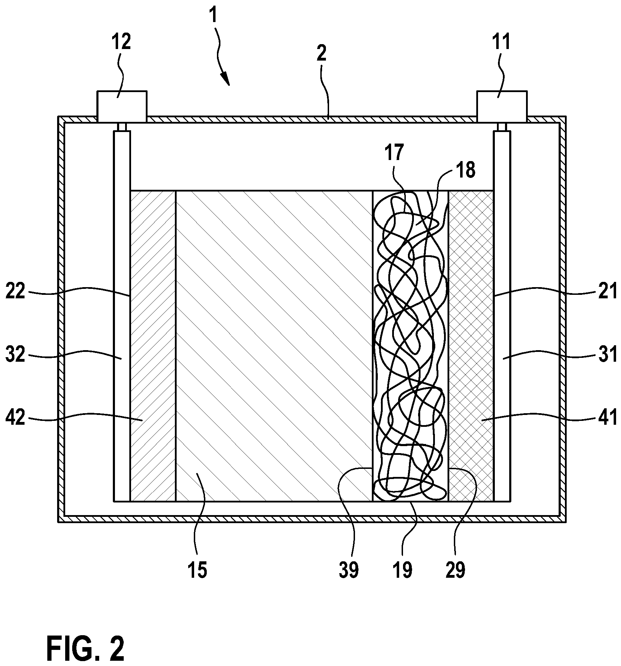

Figur 2 zeigt eine alternative Ausführungsform der erfindungsgemäßen elektrochemischen Festkörperzelle 1. Die Bestandteile der elektrochemischen Festkörperzelle 1 sind denen aus Figur 1 sehr ähnlich. Im Folgenden wird daher nur auf die Unterschiede hingewiesen. In der elektrochemischen Festkörperzelle 1 der Figur 2 ist das faserverstärkte Kompositmaterial 19 mit seiner ersten Oberfläche 29 unmittelbar auf der Oberfläche der positiven Elektrode 21 aufgebracht. Die negative Elektrode 22 und das faserverstärkte Kompositmaterial 19 sind durch den Polymerelektrolyt 15 voneinander beabstandet.

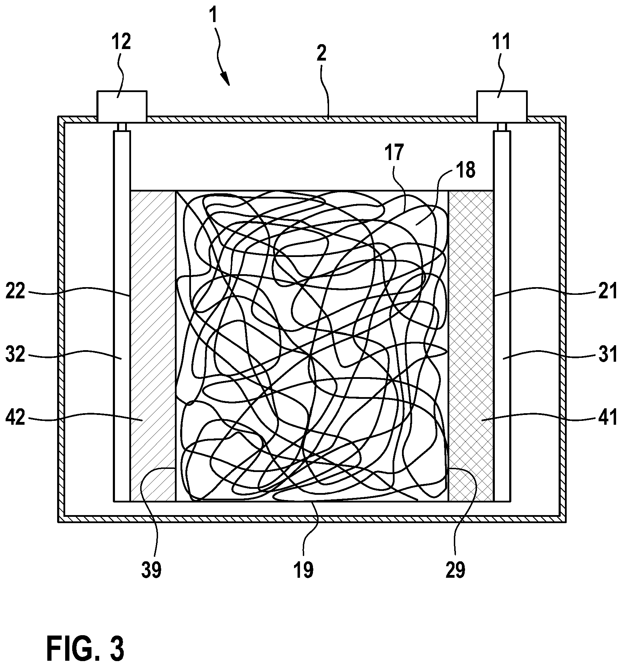

Figur 3 zeigt eine weitere alternative Ausführungsform der erfindungsgemäßen elektrochemischen Festkörperzelle 1. Die Bestandteile der elektrochemischen Festkörperzelle 1 sind denen aus Figur 1 sehr ähnlich. Im Folgenden wird daher nur auf die Unterschiede hingewiesen. In der elektrochemischen Festkörperzelle 1 der Figur 3 ist das faserverstärkte Kompositmaterial 19 mit seiner ersten Oberfläche 29 unmittelbar auf der Oberfläche der positiven Elektrode 21 aufgebracht und mit seiner zweiten Oberfläche 39 unmittelbar auf der Oberfläche der negativen Elektrode 22 aufgebracht. Das faserverstärkte Kompositmaterial 19 füllt den gesamten Zwischenraum zwischen der positiven Elektrode 21 und der negativen Elektrode 22 aus. Es ist kein zusätzlicher, reiner (d.h. nicht faserverstärkter) Polymerelektrolyt 15 vorhanden.

## Patentansprüche

1. Faserverstärktes Kompositmaterial (19), umfassend mindestens eine zusammenhängende, faserartige Struktur (17) aus mindestens einem polymeren Material, und
mindestens ein ionenleitfähiges Polymer,
wobei die mindestens eine zusammenhängende, faserartige Struktur (17) in das mindestens eine ionenleitfähige Polymer eingebettet ist und Poren (18), welche die mindestens eine zusammenhängende, faserartige Struktur (17) umfasst, im Wesentlichen vollständig von dem mindestens einen ionenleitfähigen Polymer ausgefüllt sind, wobei das faserverstärkte Kompositmaterial (19) auf mindestens einer Oberfläche (29, 39) eine Beschichtung aufweist, die aus mindestens einem Material mit einer niedrigen Oberflächenenergie von weniger als 72 mN/m gefertigt ist.

2. Faserverstärktes Kompositmaterial (19) nach Anspruch 1, wobei die mindestens eine zusammenhängende, faserartige Struktur (17) aus mindestens einem polymeren Material mit einer Schmelztemperatur von ≥ 100°C gefertigt ist.

3. Faserverstärktes Kompositmaterial (19) nach Anspruch 1 oder 2, wobei das mindestens eine polymere Material mindestens ein Polymer, ausgewählt aus Polyolefinen, Polyethern, Polyestern, Polyketonen, Polyetherketonen (D5), Polyamiden, Polyimiden, Polyamidimiden, Polysulfonen, Polyethersulfonen und Gemischen davon, umfasst.

4. Faserverstärktes Kompositmaterial (19) nach einem der Ansprüche 1 bis 3, wobei die Poren (18) der mindestens einen zusammenhängenden, faserartigen Struktur (17) so ausgestaltet sind, dass diese auch bei Temperaturen, bei denen das ionenleitfähige Polymer im geschmolzenen Zustand vorliegt, im Wesentlichen vollständig mit dem ionenleitfähige Polymer ausgefüllt sind.

5. Verfahren zur Herstellung eines faserverstärkten Kompositmaterials (19) nach einem der Ansprüche 1 bis 4, umfassend mindestens die Verfahrensschritte:
(iii) Bereitstellen mindestens einer zusammenhängenden, faserartigen Struktur (17) aus einem polymeren Material mit einer Schmelztemperatur von ≥ 100°C, und
(iv) Inkontaktbringen der mindestens einen zusammenhängenden, faserartigen Struktur (17) mit einem im Wesentlichen flüssigen, ionenleitfähigen Polymer, sodass das Porenvolumen der zusammenhängenden, faserartigen Struktur (17) im Wesentlichen vollständig, bezogen auf das gesamte offene Porenvolumen der zusammenhängenden, faserartigen Struktur (17), mit dem ionenleitfähigen Polymer gefüllt wird.

6. Elektrochemische Festkörperzelle (1), umfassend mindestens eine positive Elektrode (21) und mindestens eine negative Elektrode (22), wobei zwischen der mindestens einen negativen Elektrode (22) und der mindestens einen positiven Elektrode (21) das faserverstärkte Kompositmaterial (19) nach einem der Ansprüche 1 bis 4 angeordnet ist.

7. Elektrochemische Festkörperzelle (1) nach Anspruch 6, wobei das faserverstärkte Kompositmaterial (19) unmittelbar auf mindestens einer Oberfläche der positiven Elektrode (21) aufgebracht und/oder in einem Polymerelektrolyt (15) eingebettet ist.

8. Elektrochemische Festkörperzelle (1) nach Anspruch 7, wobei das ionenleitfähige Polymer des faserverstärkten Kompositmaterials (19) identisch mit dem im Polymerelektrolyt (15) verwendeten Polymer ist.

9. Verwendung eines faserverstärkten Kompositmaterials (19) nach einem der Ansprüche 1 bis 4 oder einer elektrochemischen Festkörperzelle (1) nach einem der Ansprüche 6 bis 8 in einem Elektrofahrzeug (EV), in einem Hybridfahrzeug (HEV), in einem Plug-In-Hybridfahrzeug (PHEV), in einem Werkzeug oder in einem Consumer-Elektronik-Produkt.

## Claims

1. Fibre-reinforced composite material (19), comprising
at least one coherent, fibre-like structure (17) composed of
at least one polymeric material, and
at least one ion-conductive polymer,
where the at least one coherent, fibre-like structure (17) is embedded in the at least one ion-conductive polymer, and pores (18) which the at least one coherent, fibre-like structure (17) comprises are filled substantially completely by the at least one ion-conductive polymer, where the fibre-reinforced composite material (19) on at least one surface (29, 39) has a coating which is made of at least one material having a low surface energy of less than 72 mN/m.

2. Fibre-reinforced composite material (19) according to Claim 1, where the at least one coherent, fibre-like structure (17) is made of at least one polymeric material having a melting temperature of ≥ 100°C.

3. Fibre-reinforced composite material (19) according to Claim 1 or 2, where the at least one polymeric material comprises at least one polymer selected from polyolefins, polyethers, polyesters, polyketones, polyetherketones (D5), polyamides, polyimides, polyamideimides, polysulfones, polyethersulfones and mixtures thereof.

4. Fibre-reinforced composite material (19) according to any of Claims 1 to 3, where the pores (18) of the at least one coherent, fibre-like structure (17) are configured such that they are filled substantially completely with the ion-conductive polymer even at temperatures under which the ion-conductive polymer is in the molten state.

5. Method for producing a fibre-reinforced composite material (19) according to any of Claims 1 to 4, comprising at least the method steps of:
(iii) providing at least one coherent, fibre-like structure (17) composed of a polymeric material having a melting temperature of ≥ 100°C, and
(iv) contacting the at least one coherent, fibre-like structure (17) with a substantially liquid, ion-conductive polymer, so that the pore volume of the coherent, fibre-like structure (17) is filled substantially completely, based on the total open pore volume of the coherent, fibre-like structure (17), with the ion-conductive polymer.

6. Solid-state electrochemical cell (1) comprising at least one positive electrode (21) and at least one negative electrode (22), where the fibre-reinforced composite material (19) according to any of Claims 1 to 4 is disposed between the at least one negative electrode (22) and the at least one positive electrode (21).

7. Solid-state electrochemical cell (1) according to Claim 6, where the fibre-reinforced composite material (19) is applied directly on at least one surface of the positive electrode (21) and/or is embedded in a polymer electrolyte (15).

8. Solid-state electrochemical cell (1) according to Claim 7, where the ion-conductive polymer of the fibre-reinforced composite material (19) is identical to the polymer used in the polymer electrolyte (15).

9. Use of a fibre-reinforced composite material (19) according to any of Claims 1 to 4 or of a solid-state electrochemical cell (1) according to any of Claims 6 to 8 in an electric vehicle (EV), in a hybrid vehicle (HEV), in a plug-in hybrid vehicle (PHEV), in a tool or in a consumer electronics product.

## Revendications

1. Matériau composite (19) renforcé par des fibres, comprenant
au moins une structure fibreuse, cohérente (17) composée d'au moins un matériau polymérique, et
au moins un polymère conducteur d'ions,
l'au moins une structure fibreuse, cohérente (17) étant incorporée dans l'au moins un polymère conducteur d'ions et des pores (18), qui comprennent l'au moins une structure fibreuse, cohérente (17), étant essentiellement totalement remplis de l'au moins un polymère conducteur d'ions, le matériau composite (19) renforcé par des fibres présentant, sur au moins une surface (29, 39), un revêtement qui est réalisé à partir d'au moins un matériau doté d'une basse énergie de surface inférieure à 72 mN/m.

2. Matériau composite (19) renforcé par des fibres selon la revendication 1, l'au moins une structure fibreuse, cohérente (17) étant réalisée à partir d'au moins un matériau polymérique doté d'une température de fusion de ≥ 100 °C.

3. Matériau composite (19) renforcé par des fibres selon la revendication 1 ou 2, l'au moins un matériau polymérique comprenant au moins un polymère choisi parmi des polyoléfines, des polyéthers, des polyesters, des polycétones, des polyéthercétones (D5), des polyamides, des polyimides, des polyamidimides, des polysulfones, des polyéthersulfones et des mélanges correspondants.

4. Matériau composite (19) renforcé par des fibres selon l'une quelconque des revendications 1 à 3, les pores (18) de l'au moins une structure fibreuse, cohérente (17) étant réalisés de telle manière que ceux-ci sont essentiellement entièrement remplis avec le polymère conducteur d'ions également à des températures auxquelles le polymère conducteur d'ions se trouve à l'état fondu.

5. Procédé pour la préparation d'un matériau composite (19) renforcé par des fibres selon l'une quelconque des revendications 1 à 4, comprenant au moins les étapes de procédé de :
(iii) mise à disposition d'au moins une structure fibreuse, cohérente (17) composée d'un matériau polymérique doté d'une température de fusion de ≥ 100 °C, et
(iv) mise en contact de l'au moins une structure fibreuse, cohérente (17) avec un polymère conducteur d'ions, essentiellement liquide, de sorte que le volume de pores de la structure fibreuse, cohérente (17) soit essentiellement totalement rempli, par rapport au volume total de pores ouverts de la structure fibreuse, cohérente (17), avec le polymère conducteur d'ions.

6. Cellule solide électrochimique (1), comprenant au moins une électrode positive (21) et au moins une électrode négative (22), le matériau composite (19) renforcé par des fibres selon l'une quelconque des revendications 1 à 4 étant agencé entre l'au moins une électrode négative (22) et l'au moins une électrode positive (21).

7. Cellule solide électrochimique (1) selon la revendication 6, le matériau composite (19) renforcé par des fibres étant appliqué directement sur au moins une surface de l'électrode positive (21) et/ou étant incorporé dans un électrolyte polymérique (15) .

8. Cellule solide électrochimique (1) selon la revendication 7, le polymère conducteur d'ions du matériau composite (19) renforcé par des fibres étant identique au polymère utilisé dans l'électrolyte polymérique (15).

9. Utilisation d'un matériau composite (19) renforcé par des fibres selon l'une quelconque des revendications 1 à 4 ou d'une cellule solide électrochimique (1) selon l'une quelconque des revendications 6 à 8 dans un véhicule électrique (EV), dans un véhicule hybride (HEV), dans un véhicule hybride rechargeable (PHEV), dans un outil ou dans un produit électronique de consommation.
